# FASCICULE DE BREVET EUROPEEN

(11) **EP 2 678 237 B1**
(45) Date de publication et mention de la délivrance du brevet: **04.03.2015**
(21) Numéro de dépôt: 12708878.9
(22) Date de dépôt: 31.01.2012
(51) Int. Cl.: B65D 6/24, H02B 1/50

(54) **BOÎTIER ÉLECTRIQUE POUR APPAREILLAGE ÉLECTRIQUE**
ELEKTRISCHES GEHÄUSE FÜR EINE ELEKTRISCHE VORRICHTUNG
ELECTRICAL HOUSING FOR ELECTRICAL EQUIPMENT

(30) Priorité: 25.02.2011 FR 1100572
(43) Date de publication de la demande: 01.01.2014
(73) Titulaire: Schneider Electric Industries SAS, 92500 Rueil-Malmaison (FR)
(72) Inventeur: GASSION, Romain, F-38140 Izeaux (FR); LINARES, Louis, F-38660 La Terrasse (FR)
(74) Mandataire: Picard, Laurent
(86) Numéro de dépôt international: PCT/FR2012/000044
(87) Numéro de publication internationale: WO 2012/114000

(56) Documents cités:
- FR-A- 1 595 132
- FR-A1- 2 243 879
- FR-A5- 2 089 198

## Description

### DOMAINE TECHNIQUE DE L'INVENTION

L'invention est relative à un boitier electrique comportant une première et une seconde enveloppes concaves destinées à être assemblées l'une à l'autre pour définir un volume fermé. Lesdites enveloppes sont respectivement délimitées par un bord identique comportant des moyens mâles d'accrochage et des moyens femelles d'accrochage répartis alternativement. Une projection du bord de chaque enveloppe sur un plan définit une courbe fermée ayant au moins deux axes de symétrie.

### ETAT DE LA TECHNIQUE ANTERIEURE

L'utilisation de boîtiers électriques comportant deux enveloppes concaves est largement divulguée notamment dans le domaine électrique.

Les boitiers comportent généralement un couvercle adapté à une enveloppe dans laquelle, à titre d'exemple, seront positionnés des dispositifs électriques. Les couvercles des boitier électriques sont généralement fixés à l'enveloppe via une serrure ou par l'intermédiaire d'une ou plusieurs vis.

A titre d'exemple de réalisation, quatre vis sont utilisées pour des boitiers électriques. Les boitiers électriques de forme parallélépipédique comportent alors un couvercle de forme rectangulaire comportant quatre passages de vis disposés respectivement dans les quatre angles du rectangle.

Ces moyens de fixation multiples présentent notamment l'inconvénient d'appliquer des forces de serrage différentes entre chaque point de fixation.

Cette disparité introduit des déformations du couvercle par rapport à l'enveloppe, déformations pouvant être responsables de problèmes d'étanchéité du boitier électrique. Enfin, lorsque les moyens de fixation comportent des vis de serrage, les passages de vis à travers le couvercle peuvent aussi être responsables de problème d'étanchéité. En outre, le fait d'utiliser plusieurs moyens de fixation, notamment plusieurs vis, augmente le temps de fixation du couvercle sur l'enveloppe du boitier.

Par ailleurs les boitiers de forme parallélépipédique présentent des volumes intérieurs qui ne sont pas toujours faciles d'accès pour y intégrer par exemple du matériel électrique.

### EXPOSE DE L'INVENTION

L'invention vise donc à remédier aux inconvénients de l'état de la technique, de manière à proposer une boîte facile à utiliser et à fabriquer.

Chaque bord d'enveloppe du boitier électrique selon l'invention comporte au moins une paire de moyens mâles d'accrochage et une paire de moyens femelles d'accrochage, les moyens mâles et femelle d'accrochage étant répartis alternativement sur le bord et chaque moyen male d'accrochage étant disposé en vis à vis d'un moyen femelle d'accrochage de manière à ce que lesdits moyens mâle et femelle soient disposés symétriquement par rapport à un des axes de symétrie. Selon un mode préférentiel de réalisation les deux moyens d'accrochage d'une même paire sont disposés symétriquement par rapport à un centre de symétrie, ledit centre de symétrie étant défini comme le point d'intersection des axes de symétrie.

Selon un premier mode particulier de réalisation, les bords de chaque enveloppe définissent respectivement un plan.

Selon un second mode particulier de réalisation, les bords de chaque enveloppe définissent respectivement une courbe concave et/ou convexe.

De préférence, le boitier électrique selon l'invention comporte au moins deux moyens d'accrochages mâles et deux moyens d'accrochage femelles. Avantageusement, les bords de chaque enveloppe comportent un profil rectangulaire

Selon un mode de développement de l'invention, les moyens d'accrochage comportent une lèvre de recouvrement, une lèvre de recouvrement d'un moyen mâle d'accrochage est destinée venir recouvrir une lèvre femelle de recouvrement.

De préférence, les lèvres de recouvrement comportent une ergot de clipsage, chaque ergot étant destiné à venir collaborer avec un autre ergot de clipsage pour maintenir les deux enveloppes en contact.

De préférence, le boitier électrique selon l'invention comporte un joint déformable positionné sur le bord d'au moins une des deux enveloppes concaves, le joint déformable étant destiné à s'intercaler entre les lèvres de recouvrement des moyens mâle et femelle d'accrochage.

Avantageusement, les deux enveloppes concaves sont de forme identique.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
la figure 1 représente une vue en perspective d'une enveloppe concave d'un boitier électrique selon un premier mode préférentiel de réalisation de l'invention ;
la figure 2 représente un vue en perspective de deux enveloppes en cours d'assemblage d'un boitier électrique selon la figure 1 ;
les figures 3A, 3B et 3C représentent des vues en perspective de deux enveloppes assemblées d'un boitier électrique selon la figure 1 ;
la figure 4A représente, à titre d'exemple d'application, une vue en perspective d'un boitier électrique selon l'invention destinée au domaine électrique ;
la figure 4B représente une vue en perspective d'un boitier électrique dans une position fermée selon la figure 4A ;
la figure 5 représente des vues en perspective de deux enveloppes assemblées d'un boitier électrique selon un second mode de réalisation de l'invention.

### DESCRIPTION DETAILLEE D'UN MODE DE REALISATION

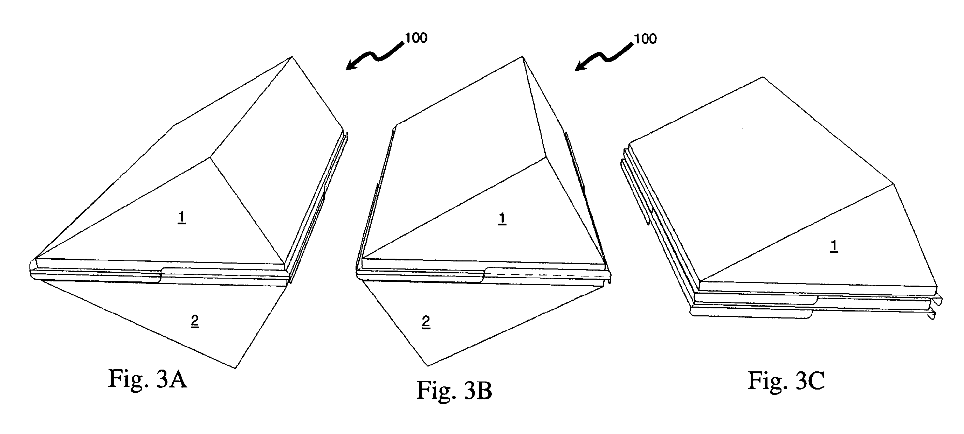

Selon un mode de réalisation représenté sur les figures 3A et 3B, le boitier électrique 100 comporte une première et une seconde enveloppes concaves 1, 2 destinées à être assemblées l'une à l'autre pour définir un volume fermé.

Selon les modes de réalisaton de l'invention présentés sur les figures 3A à 3C, les deux enveloppes concaves sont de préférence identiques. A titre d'exemple, les enveloppes de forme concave ont une section transverse de forme triangulaire. Lesdites enveloppes 1, 2 sont respectivement délimitées par un bord comportant de moyens mâles d'accrochage M et des moyens femelles d'accrochage F.

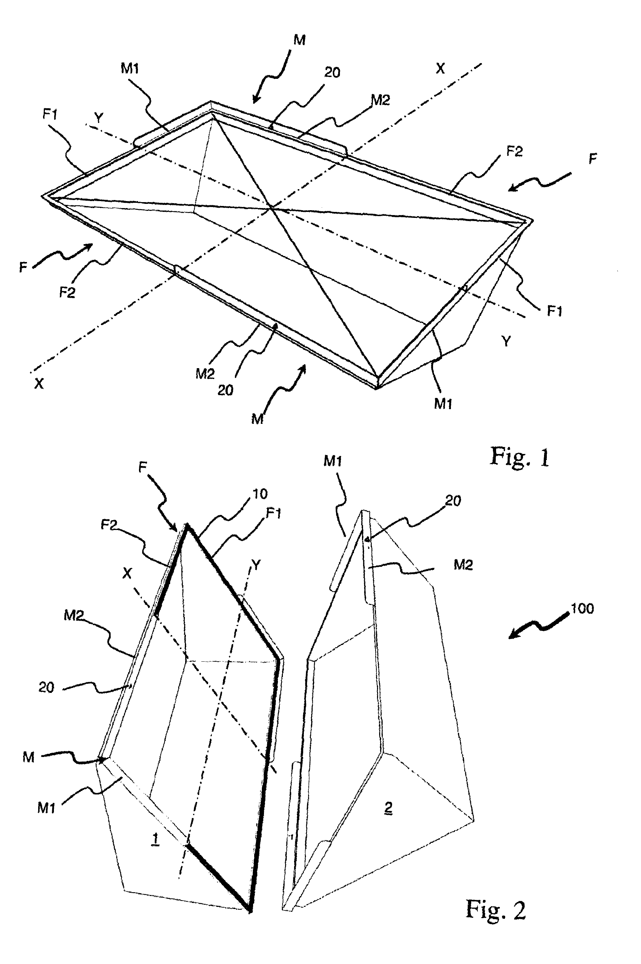

Selon un mode particulier de réalisation représenté sur la figure 1, une projection du bord de chaque enveloppe sur un plan définit une courbe fermée ayant au moins deux axes de symétrie X, Y. En outre, de préférence, les bords de chaque enveloppe1, 2 définissent respectivement un plan.

Selon un mode de réalisaton préférentiel, les bords des deux enveloppes 1, 2 sont identiques. Chaque bord d'enveloppe comporte au moins une paire de moyens mâles d'accrochage M et une paire de moyens femelles d'accrochage F.

Les moyens mâles et femelle d'accrochage sont répartis alternativement sur le bord. Chaque moyen mâle d'accrochage est disposé en vis à vis d'un moyen femelle d'accrochage de manière ce que lesdits moyens mâle et femelle soient disposés symétriquement par rapport à un des axes de symétrie X, Y.

A titre d'exemple de réalisation tel que représenté sur la figure 1, les bords de chaque enveloppe comportent un profil rectangulaire. Chaque enveloppe 1 , 2 comporte au moins deux moyens mâles d'accrochage et deux moyens femelles d'accrochage F. Chaque moyen mâle d'accrochage M comporte deux zones mâles d'accrochage M1, M2 réparties de part et d'autre d'un sommet du rectangle. En outre, chaque moyen femelle d'accrochage F comporte aussi deux zones femelles d'accrochage F1, F2 réparties de part et d'autre d'un sommet du rectangle. Une première zone mâle d'accrochage M1 et une première zone femelle d'accrochage F1 sont placées en symétrie par rapport à un premier axe de symétrie X. En outre, une seconde zone mâle d'accrochage M2 et une seconde zone femelle d'accrochage F2 sont placées en symétrie par rapport à un premier axe de symétrie Y. Selon ce mode particulier de realisation de la figure, les deux moyens d'accrochage d'une même paire sont disposés symétriquement par rapport à un centre de symétrie, centre de symétrie correspondant au point d'intersection des deux axes de symétrie X, Y.

Le nombre d'axes de symétrie permet de déterminer le nombre de configuration d'assemblage d'une enveloppe sur l'autre.

Comme représenté sur les figures 3A et 3B, dans le cas d'un bord en forme de rectangle ayant deux axes de symétrie X, Y, il existe deux positions d'assemblage des enveloppes. De plus, la possibilité d'assembler les enveloppes selon deux position permet d'utiliser le boitier électrique 100 soit pour renfermer du matériel électrique, soit pour supporter des interfaces homme machine (bouton poussoir, voyant, écran) à la manière d'un pupitre.

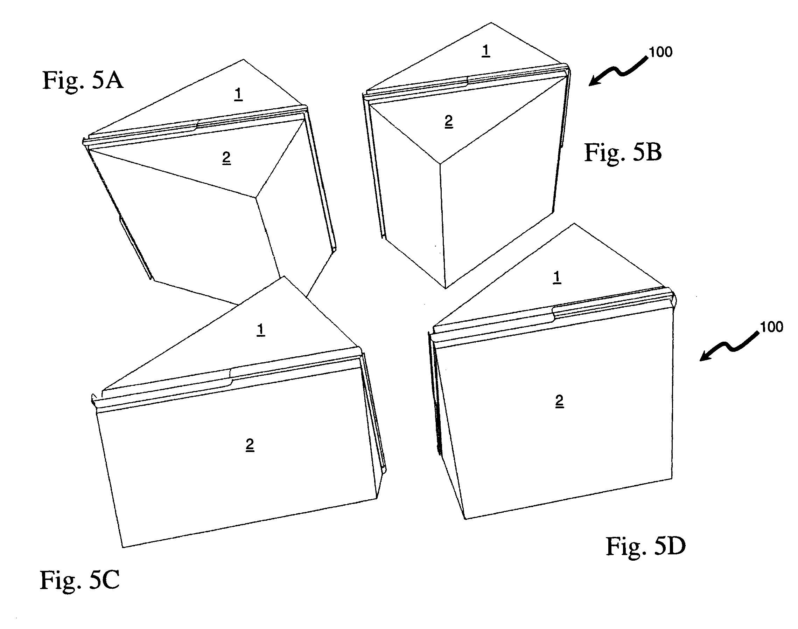

Comme représenté sur les figures 5A, 5B, 5C et 5D, dans le cas d'un bord en forme de carré ayant quatre axes de symétrie X, Y, il existe quatre positions d'assemblage des enveloppes.

Avec une enveloppe ayant un bord en forme d'hexagone régulier, il y aurait six positions distinctes d'assemblage.

De manière plus générale, le nombre de positions distinctes d'assemblage est directement proportionnel au nombre d'axes de symétrie. Selon un mode particulier de réalisation, les moyens mâles et femelles d'accrochage M, F comportent respectivement une lèvre de recouvrement.

Une lèvre de recouvrement d'un moyen d'accrochage mâle est destinée venir recouvrir une lèvre de recouvrement femelle. Les lèvres de recouvrement comportent un ergot de clipsage 20, chaque ergot étant destiné à venir collaborer avec un autre ergot de clipsage pour maintenir les deux enveloppes en contact.

Selon une variante de réalisation, un joint déformable 10 est positionné sur le bord d'au moins une des deux enveloppes concaves, le joint déformable étant destiné à s'intercaler entre les lèvres de recouvrement des moyens d'accrochage mâle et femelle.

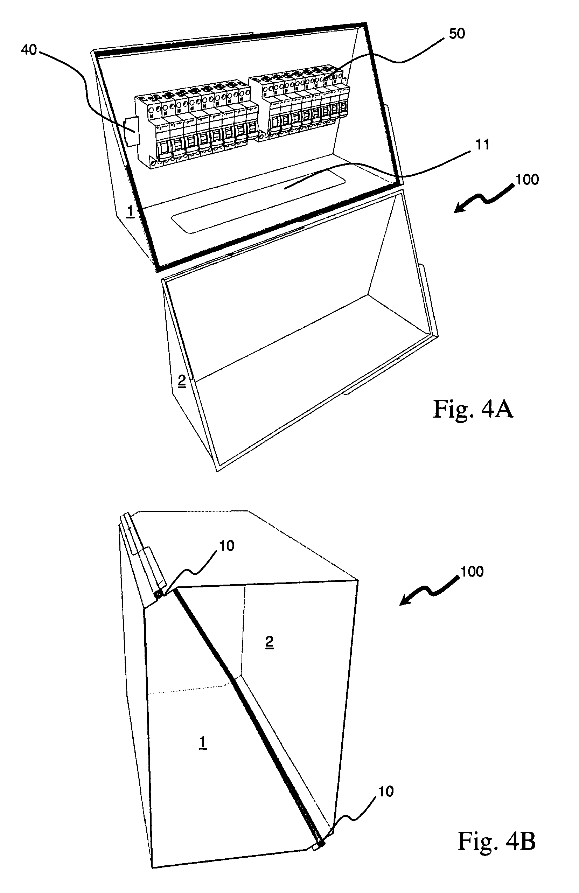

Selon une variante de réalisation de l'invention non représentée, le boitier électrique 100 comporte une entretoise creuse tubulaire comportant un premier bord destiné à être en contact avec le bord de la première enveloppe et un second bord destiné à être en contact avec le bord de la seconde enveloppe. Selon une autre variante de réalisation non représentée, les bords de chaque enveloppe définissent respectivement une courbe concave et/ou convexes. Le boitier électrique 100 selon l'invention est particulièrement destinée à des applications électriques pour être utilisée comme boitier électrique. Comme représenté sur la figure 4A, le boitier électrique 100 selon l'invention est alors destinée à recevoir des appareillages électriques 50. Une des deux enveloppe est plus particulièrement destinée à contenir un rail de fixation 40 de type rail DIN et les appareillages électriques 50 tels que notamment des disjoncteurs. Ladite enveloppe peut aussi comporter alors des ouvertures 11 pour le passage de câbles électriques. L'autre enveloppe est alors plus particulièrement destinée à être utilisée en tant que couvercle du boitier électrique. Selon un mode de réalisation de l'invention, le boitier électrique 100 comporte de préférence deux enveloppes de forme identiques. L'utilisation de deux enveloppes de forme identique permet notamment de réduire les coûts d'industrialisation. En outre, le fait d'utiliser deux enveloppes de forme identique permet aussi d'accessoiriser de manière indifférentiée l'une ou l'autre des enveloppes. Enfin, comme représenté sur la figure 3C, la forme de chaque enveloppe permet aussi un empilage desdites enveloppes les unes sur les autres et permet ainsi une réduction du volume des boitiers électriques pour le le stockage et le transport.

Selon un mode de réalisation non représenté, les deux enveloppes peuvent avoir des formes différentes.

## Revendications

1. Boîtier électrique (100) pour appareillage électrique comportant une première et une seconde enveloppes (1, 2) concaves destinées à être assemblées l'une à l'autre pour définir un volume fermé, une projection du bord de chaque enveloppe sur un plan définissant une courbe fermée ayant au moins deux axes de symétrie (X, Y), Boîtier **caractérisé en ce que** lesdites enveloppes sont respectivement délimitées par un bord identique, chaque bord d'enveloppe comportant au moins une paire (M1, M2) de moyens mâles d'accrochage et une paire (F1, F2) de moyens femelles d'accrochage, les moyens mâles et femelles d'accrochage étant répartis alternativement sur le bord et chaque moyen mâle d'accrochage étant disposé en vis à vis d'un moyen femelle d'accrochage de manière à ce que lesdits moyens mâle et femelle soient disposés symétriquement par rapport à un des axes de symétrie (X, Y).

2. Boîtier électrique selon la revendication 1, **caractérisé en ce que** les deux moyens d'accrochage d'une même paire sont disposés symétriquement par rapport à un centre de symétrie, ledit centre de symétrie étant défini comme le point d'intersection des axes de symétrie (X, Y).

3. Boîtier électrique selon la revendications 1 ou 2, **caractérisé en ce que** les bords de chaque enveloppe définissent respectivement un plan.

4. Boîtier électrique selon la revendications 1 ou 2, **caractérisé en ce que** les bords de chaque enveloppe définissent respectivement une courbe concave et/ou convexe.

5. Boîtier électrique selon l'une quelconques des revendications précédentes, **caractérisé en ce que** les bords de chaque enveloppe comportent un profil rectangulaire.

6. Boîtier électrique selon l'une quelconques des revendications précédentes, **caractérisé en ce que** les moyens d'accrochage (M, F) comportent une lèvre de recouvrement, une lèvre de recouvrement d'un moyen mâle (M) d'accrochage est destinée à venir recouvrir une lèvre femelle (F) de recouvrement.

7. Boîtier électrique selon la revendication 6, **caractérisé en ce que** les lèvres de recouvrement comportent un ergot de clipsage (20), chaque ergot étant destiné à venir collaborer avec un autre ergot de clipsage pour maintenir les deux enveloppes (1, 2) en contact.

8. Boîtier électrique selon les revendications 6 ou 7, **caractérisé en ce qu'**il comporte un joint déformable (10) positionné sur le bord d'au moins une des deux enveloppes concaves, le joint déformable étant destiné à s'intercaller entre les lèvres de recouvrement des moyens mâle et femelle d'accrochage.

9. Boîtier électrique selon l'une quelconque des revendications précédentes, **caractérisé en ce que** les deux enveloppes (1, 2) concaves sont de forme identique.

## Patentansprüche

1. Elektrogehäuse (100) für elektrische Schaltgeräte umfassend einen ersten und einen zweiten konkaven Gehäusekasten (1, 2), die dazu dienen zur Bildung eines geschlossenen Raums aneinandergebaut zu werden, wobei die Projektionsfläche des Rands jedes Gehäusekastens in einer Ebene eine geschlossene Kurve mit mindestens zwei Symmetrieachsen (X, Y) darstellt, welches Gehäuse **dadurch gekennzeichnet ist, dass** die genannten Gehäusekästen durch jeweils einen identischen Rand begrenzt werden, wobei im Rand jedes Gehäusekastens mindestens zwei positive Rastmittel (M1, M2) sowie zwei negative Rastmittel (F1, F2) ausgebildet sind, die genannten positiven und negativen Rastmittel abwechselnd auf dem Rand verteilt sind und jedes positive Rastmittel gegenüber einem negativen Rastmittel angeordnet ist, derart, dass die genannten positiven und negativen Rastmittel symmetrisch zu einer der Symmetrieachsen (X, Y) angeordnet sind.

2. Elektrogehäuse nach Anspruch 1, **dadurch gekennzeichnet, dass** die beiden Rastmittel eines Rastmittelpaares symmetrisch zu einem Symmetriemittelpunkt angeordnet sind, welcher Symmetriemittelpunkt durch den Schnittpunkt der Symmetrieachsen (X, Y) gebildet wird.

3. Elektrogehäuse nach Anspruch 1 oder 2, **dadurch gekennzeichnet, dass** die Ränder jedes Gehäusekastens jeweils eine Ebene definieren.

4. Elektrogehäuse nach Anspruch 1 oder 2, **dadurch gekennzeichnet, dass** die Ränder jedes Gehäusekastens jeweils eine konkave bzw. konvexe Kurve beschreiben.

5. Elektrogehäuse nach irgendeinem der vorhergehenden Ansprüche, **dadurch gekennzeichnet, dass** die Ränder jedes Gehäusekastens ein Rechteckprofil umfassen.

6. Elektrogehäuse nach irgendeinem der vorhergehenden Ansprüche, **dadurch gekennzeichnet, dass** die Rastmittel (M, F) eine Überlappungsleiste umfassen, wobei eine Überlappungsleiste eines positiven Rastmittels (M) dazu dient, eine Überlappungsleiste eines negativen Rastmittels (F) zu überdecken.

7. Elektrogehäuse nach Anspruch 6, **dadurch gekennzeichnet, dass** in den Überlappungsleisten eine Schnappnase (20) ausgebildet ist, wobei jede Schnappnase dazu dient, mit einer anderen Schnappnase zusammenzuwirken, um die beiden Gehäusekästen (1, 2) zusammenzuhalten.

8. Elektrogehäuse nach Anspruch 6 oder 7, **dadurch gekennzeichnet, dass** es eine auf dem Rand mindestens einer der beiden konkaven Gehäusekästen angeordnete elastische Dichtung (10) umfasst, welche elastische Dichtung dazu dient, zwischen die Überlappungsleisten der positiven und negativen Rastmittel einzugreifen.

9. Elektrogehäuse nach irgendeinem der vorhergehenden Ansprüche, **dadurch gekennzeichnet, dass** die beiden konkaven Gehäusekästen (1, 2) eine identische Form aufweisen.

## Claims

1. Electrical housing (100) for electrical switchgear comprising a first and a second concave enclosures (1, 2) intended to be joined together to define a closed volume, a projection of the edge of each enclosure on a plane defining a closed curve having at least two axes of symmetry (X, Y),
the housing being **characterised in that** said enclosures are respectively delimited by an identical edge, each enclosure edge comprising at least one pair (M1, M2) of male attachment means and one pair (F1, F2) of female attachment means, the male and female attachment means being distributed alternately on the edge and each male attachment means being arranged facing a female attachment means so that said male and female means are arranged symmetrically relative to one of the axes of symmetry (X, Y).

2. Electrical housing according to Claim 1, **characterised in that** the two attachment means of one and the same pair are arranged symmetrically relative to a centre of symmetry, said centre of symmetry being defined as the point of intersection of the axes of symmetry (X, Y).

3. Electrical housing according to Claim 1 or 2, **characterised in that** the edges of each enclosure respectively define a plane.

4. Electrical housing according to Claim 1 or 2, **characterised in that** the edges of each enclosure respectively a concave and/or convex curve.

5. Electrical housing according to any one of the preceding claims, **characterised in that** the edges of each enclosure comprise a rectangular profile.

6. Electrical housing according to any one of the preceding claims, **characterised in that** the attachment means (M, F) comprise an overlapping lip, an overlapping lip of a male (m) attachment means being intended to cover a female (F) overlapping lip.

7. Electrical housing according to Claim 6, **characterised in that** the overlapping lips comprise a snap-fitting snug (20), each snug being intended to collaborate with another snap-fitting snug to keep the two enclosures (1, 2) in contact.

8. Electrical housing according to Claim 6 or 7, **characterised in that** it comprises a deformable seal (10) positioned on the edge of at least one of the two concave enclosures, the deformable seal being intended to be inserted between the overlapping lips of the male and female attachment means.

9. Electrical housing according to any one of the preceding claims, **characterised in that** the two concave enclosures (1, 2) are of identical shape.
